# FASCICULE DE BREVET EUROPEEN

(11) **EP 0 754 535 B1**
(45) Date de publication et mention de la délivrance du brevet: **12.04.2000**
(21) Numéro de dépôt: 96401461.7
(22) Date de dépôt: 02.07.1996
(51) Int. Cl.: B29C 47/06

(54) **Procédé pour la coextrusion de deux matières à des températures différentes**
Verfahren zum Koextrudieren von zwei Materialen mit unterschiedlicher Temperatur
Method for coextruding two materials having different temperatures

(30) Priorité: 17.07.1995 FR 9508597
(43) Date de publication de la demande: 22.01.1997
(73) Titulaire: ELF ATOCHEM S.A., 92800 Puteaux, Hauts-de-Seine (FR)
(72) Inventeur: Ballu, Guerric, 75013 Paris (FR); Cognet, Gilles, 27300 Bernay (FR); Denizart, Olivier, 69390 Millery (FR); Dousson, Christian, 27300 Bernay (FR)
(74) Mandataire: Neel, Henry

(56) Documents cités:
- EP-A- 0 435 790
- EP-A- 0 655 311
- US-A- 4 370 187
- US-A- 4 484 883
- PATENT ABSTRACTS OF JAPAN vol. 010, no. 326 (M-532), 6 Novembre 1986 & JP-A-61 134220 (TOYO SEIKAN KAISHA LTD), 21 Juin 1986,

## Description

La présente invention concerne un procédé de coextrusion d'au moins deux matières présentant des températures de mise en oeuvre très différentes, telles que par exemple du polyamide 12 (240°C) et une composition vulcanisable à base de nitrile/butadiene carboxylé (120°C).

Les tubes souples utilisés dans le compartiment moteur des automobiles pour le liquide de refroidissement ou les fluides de climatisation sont en caoutchouc vulcanisé. Ils présentent ainsi une bonne résistance à la chaleur, à la pression et une bonne tenue chimique aussi bien aux fluides transportés qu'à l'huile et aux graisses pouvant être présents près d'un moteur. La protection de l'environnement oblige que ces tubes soient beaucoup plus étanches aux fluides transportés. Il faut donc que ces tubes aient une couche intérieure plus étanche que le caoutchouc, elle peut être choisie par exemple parmi des thermoplastiques tels que les polyamides, les polyesters, les polyoléfines ou leurs alliages. On utilise aussi pour les automobiles des tubes de circuit de freinage en polyamide, des tubes d'essence entre le réservoir et le moteur, en polyamide ou en polyamide avec une couche intérieure en polyfluorure de vinylidene (PVDF). Ces tubes peuvent être recouverts en tout ou partie par du caoutchouc pour les protéger des points chauds du moteur et réduire leur fluage à chaud.

Des thermoplastiques tels que les polyamides s'extrudent au-dessus de 200°C, alors que les caoutchoucs formulés avec leurs additifs et agents de vulcanisation s'extrudent entre 100 et 120°C au plus sinon la vulcanisation démarre dans l'extrudeuse et le recouvrement du thermoplastique ne peut pas se faire.

Les têtes de coextrusion sont en métal et donc les transferts de chaleur par conduction thermique entre deux matières à des températures très différentes sont importants.

Selon l'art antérieur pour fabriquer un tube ayant une couche intérieure en thermoplastique et une couche extérieure en caoutchouc vulcanisé, il est nécessaire de produire le tube en thermoplastique, par exemple par une tête d'extrusion, de mettre un mandrin dans le tube pour compenser la pression qui sera exercée par la couche extérieure pendant le recouvrement, puis ultérieurement de reprendre ce tube dans une autre tête d'extrusion dite "en tête d'équerre" dans laquelle le caoutchouc formulé avec ses additifs et les agents de vulcanisation vient recouvrir le tube existant en thermoplastique. Puis le tube ainsi recouvert est passé dans un tunnel chauffant ou dans un four pour être vulcanisé. On retire ensuite le mandrin.

La tête d'extrusion "en tête d'équerre" est utilisée par exemple pour gainer des câbles électriques avec une matière thermoplastique. On fait avancer un câble électrique dans une filière puis on extrude la matière thermoplastique perpendiculairement au câble dans cette filière de telle sorte qu'elle recouvre le câble. Pour obtenir une bonne adhésion entre la couche thermoplastique et la couche externe d'élastomère, il est nécessaire d'intercaler une couche adhésive entre l'élastomère et le thermoplastique.

Le brevet US 4 484 883 décrit un dispositif pour la coextrusion de matières à haut et bas points de fusion (col. 1, I. 26 à 30 et col. 2, I. 18 à 21).

En fait il ne s'agit que de polyéthylène haute densité de point de fusion 131 °C et de polyéthylène basse densité de point de fusion 110°C.

La demanderesse a maintenant trouvé un nouveau procédé pour coextruder deux matières à des températures très différentes telles que par exemple du polyamide à 220°C et du caoutchouc à vulcaniser à 120°C ou moins. On peut ainsi fabriquer en une seule étape un tube de polyamide recouvert de caoutchouc au lieu de reprendre dans une tête d'équerre un tube de polyamide déjà extrudé. Mais surtout la demanderesse a découvert que le fait de coextruder ces deux matières, c'est-à-dire de réaliser simultanément les deux couches du tube, améliore l'adhérence entre les deux couches puisque les deux matières se rencontrent à l'état fondu alors que dans l'art antérieur, la deuxième matière en fusion rencontre la première matière déjà solidifiée. Un autre avantage de l'invention est que la rencontre des deux flux de matières se fait sous pression.

La présente invention concerne un procédé de coextrusion d'au moins deux matières ayant des températures d'extrusion très différentes, selon lequel on fait passer lesdites matières de façon séquentielle ou simultanée dans un dispositif muni d'au moins un orifice, le dispositif muni d'un orifice comprenant des tubes de transfert de chaleur fonctionnant par l'évaporation, la condensation et le pompage en tension superficielle d'un liquide dans une mèche capillaire, et selon lequel les températures d'extrusion des deux matières diffèrent de 50 à 150°C, et plus particulièrement de 80 à 120°C.

On entend par coextrusion tout procédé dans lequel au moins deux matières en fusion passent dans le même orifice pour former un objet ayant une partie dans l'une des matières et une autre partie dans l'autre matière. Par exemple, si l'orifice est en forme de couronne et que les deux matières proviennent chacune d'une extrudeuse, on fabrique ainsi en continu des tubes coextrudés ayant deux couches, une dans chaque matière. On peut aussi souffler un gaz dans le tube préalablement formé et soudé pour provoquer son expansion contre la paroi d'un moule et fabriquer des corps creux tels que des bouteilles. La coextrusion des deux matières peut être continue, ou discontinue. Par exemple, si l'orifice alimente un moule de soufflage, on peut extruder les deux matières simultanément ou de façon séquentielle. Les deux matières sont telles que les températures ou les plages de température auxquelles elles sont en fusion ou dans un état plastique, pour pouvoir passer dans un orifice, sont très différentes.

En effet, le dispositif muni d'un orifice est le plus souvent une pièce métallique qui est donc bon conducteur de la chaleur. Il est donc facile de coextruder deux matières qui sont en fusion dans la même plage de température ou dans des plages très voisines. Mais si ces plages sont très différentes la conduction thermique empêche de maintenir ces plages. L'invention concerne plus particulièrement les matières thermoplastiques. A titre d'exemple de couples de matières on peut citer les polyamides et les caoutchoucs formulés avec des agents de vulcanisation. Parmi les polyamides, on peut citer le PA-6, PA-6,6, PA-11, PA-12, PA-6,4, le PA-6,12 ou les alliages de polyamides et de polyoléfines. Ces polyamides et leurs alliages s'extrudent vers 200 à 240°C. A titre d'exemple de caoutchouc, formulé avec des agents de vulcanisation, on peut citer les compositions à base de nitrile-butadiene carboxylés (X-NBR), de styrène-butadiene (SBR) ou d'éthylène-propylène-diène (EPDM), ou toute autre formulation d'élastomère, telles que par exemple celles décrites dans EP 607085. Ils s'extrudent vers 110 à 120°C.

A titre d'autre couple des matières on peut citer les polyoléfines, les polystyréniques, les polyoléfines greffées ou copolymérisées avec des anhydrides d'acides carboxyliques insaturés, le polycarbonate, le PVDF, pour l'une des matières et un caoutchouc éthylène - propylène (EPR), un caoutchouc formulé avec des agents de vulcanisation, le polychlorure de vinyle (PVC) pour l'autre matière.

L'invention est particulièrement utile pour le couple PVC/PVDF. Le procédé de l'invention est utile pour coextruder deux matières ayant des températures d'extrusion pouvant différer de 50 à 150°C et plus particulièrement de 80 à 120°C.

Le dispositif muni d'au moins un orifice peut être une pièce métallique telle que ledit orifice est un orifice rectangulaire, c'est-à-dire une filière plate alimentée par les deux matières en fusion de manière à ce que l'une des matières arrive dans une partie (a) de la filière plate et l'autre matière dans une partie (b) de ladite filière. Les parties (a) et (b) de la filière plate correspondent à sa division par une droite parallèle à sa plus grande dimension. Les flux arrivant par (a) et (b) se rencontrent dans un canal droit de longueur au moins égale à 10 fois l'entrefer de (a) + (b).

Le dispositif muni d'au moins un orifice peut être aussi, par exemple une pièce métallique comprenant un orifice en forme de couronne alimenté par les deux matières en fusion de manière à ce que l'une des matières arrive dans une partie (a) de la couronne et l'autre matière dans une partie (b) de ladite couronne. Les parties (a) et (b) de la couronne correspondent à sa division par un cercle concentrique. Les flux de matière arrivant par (a) et (b) se rencontrent dans un canal annulaire dont la longueur est au moins 10 fois l'entrefer de (a) + (b).

Le dispositif qui est muni d'au moins un orifice et dans lequel on fait passer les deux matières en fusion comprend au moins une arrivée pour chaque matière. Ces arrivées sont reliées à des extrudeuses ou à tout moyen délivrant la matière en fusion. L'orifice du dispositif peut alimenter un moule d'extrusion soufflage ou un conformateur d'un bac de calibrage de tube. Ledit dispositif comprend des tubes de transfert de chaleur dans ses parties soumises à des gradients thermiques importants, c'est-à-dire pour éviter que la chaleur de la matière la plus grande ne vienne trop chauffer la matière la moins chaude. Ces tubes fonctionnent en refroidissement, c'est-à-dire qu'ils enlèvent de la chaleur pour éviter la conduction vers la matière la moins chaude. Ces tubes ne sont pas nécessaires quand, par exemple, le temps de séjour de la matière la moins chaude dans le dispositif de l'invention est suffisamment court pour que la matière reste dans sa plage de température d'extrusion.

Ces tubes de transfert de chaleur permettent de transporter de la chaleur à grande vitesse sur de longues distances avec un gradient thermique très faible.

Le principe de ces tubes repose sur l'évaporation, la condensation et le pompage en tension superficielle d'un liquide dans une mèche capillaire. Ceci permet de transférer en continu de la chaleur latente d'un endroit à un autre sans énergie extérieure.

Le dispositif qui comprend l'orifice est donc traversé par ces tubes capillaires. Avantageusement, il suffit de tubes de transfert de chaleur fonctionnant en évaporation pour emporter la chaleur provenant de la matière la plus chaude et ainsi éviter qu'elle ne chauffe la matière la moins chaude. On ne sortirait pas du cadre de l'invention si le dispositif comprenait des tubes de transfert de chaleur pour réchauffer la matière qui doit être la plus chaude, des tubes pour évacuer la chaleur qui se propage dans le dispositif entre la partie ou circule la matière la plus chaude et la partie ou circule la matière la moins chaude ou toute combinaison de ces possibilités. Les systèmes conventionnels de chauffage par circulation d'huile ou des résistances électriques ne sont pas suffisants, de plus par leur encombrement, ils accroissent la température de la masse métallique du dispositif, ce qui gêne l'évacuation de chaleur dans les autres parties.

De même pour les systèmes conventionnels de refroidissement par circulation d'huile ou d'eau glycolée, leur puissance est fonction du gradient entre la paroi à refroidir et leur température, elle est insuffisante. On ne sortirait pas du cadre de l'invention si le dispositif comprenait des calorifuges, des éléments de chauffage pour l'envelopper et ainsi limiter les pertes thermiques des parties qui doivent rester chaudes. En effet, des dispositifs de coextrusion, par exemple pour fabriquer des tubes de 15 ou 20 mm de diamètre sont très compacts et peuvent être contenus dans un volume de 0,3 m x 0,3m x 0,3m, les pertes thermiques sont très importantes. Il est nécessaire d'empêcher la chaleur de la matière la plus chaude d'aller vers l'autre mais il est aussi nécessaire de maintenir la matière la plus chaude dans sa plage de température pour pouvoir l'extruder. Il en est de même pour la matière la moins chaude, elle ne doit pas être au-delà de sa température d'extrusion mais elle ne doit pas non plus être en dessous.

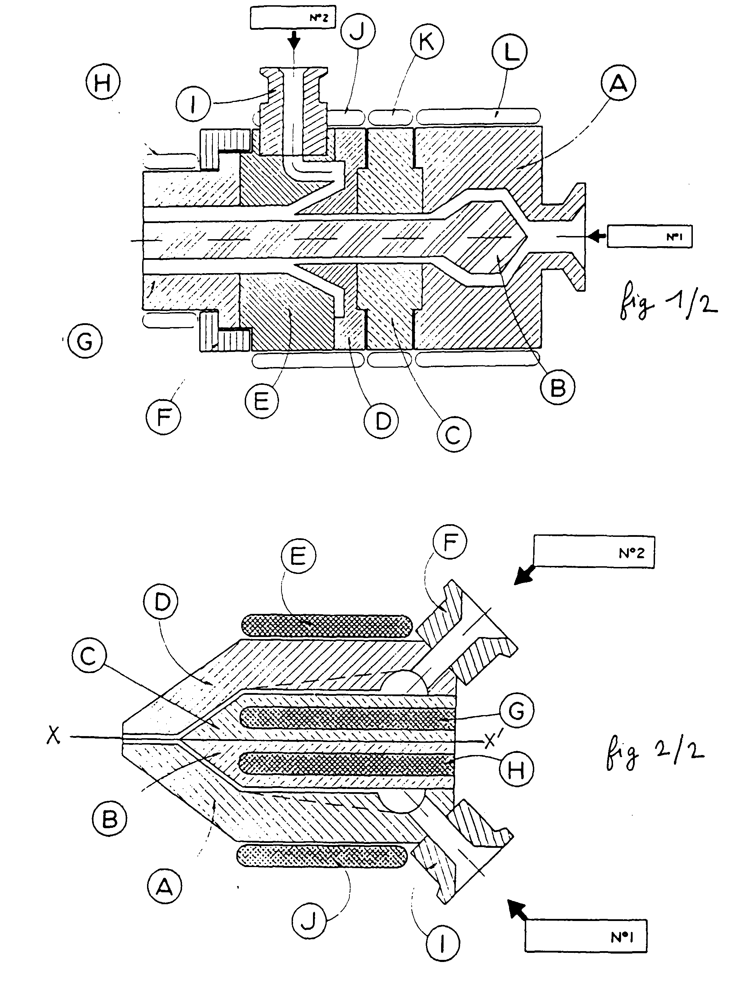

Les figures 1/2 et 2/2 suivantes représentent deux formes particulières du dispositif utilisé pour la mise en oeuvre de l'invention. La figure 1/2 est un dispositif pour coextruder des tubes, tous les éléments sont en acier, la figure est une coupe longitudinale selon l'axe longitudinal, toutes les pièces sont de symétrie cylindrique selon cet axe longitudinal sauf l'arrivée n° 2 et les canaux à l'intérieur des pièces (D) et (E). N° 1 est l'arrivée de la matière la plus chaude, n° 2 est l'arrivée de l'autre matière. (A) est la filière d'extrusion de la matière la plus chaude, (B) est le poinçon, (C) l'élément contenant les tubes de transfert de chaleur (non représentés), (D) la partie arrière de la filière de coextrusion, (E) la partie avant de la filière de coextrusion, (F) une bride, (G) une filière, (H) un élément de chauffage, (I) le manchon d'arrivée de la matière la moins chaude, (J), (K) et (L) des éléments de chauffage. On distingue bien dans l'élément (E) les deux arrivées de matières concentriques selon une couronne.

La figure 2/2 est un dispositif pour coextruder des plaques ou des films. Le dispositif présente deux plans de symétrie perpendiculaires, l'un des plans représente la frontière entre les deux plaques ou les deux films coextrudés et son prolongement dans le dispositif (pour autant que les deux plaques ou films aient la même épaisseur). XX' représente la coupe de ce plan de symétrie, (n° 1) l'arrivée de la matière la plus chaude, (n° 2) l'arrivée de l'autre matière, (A) la partie inférieure de répartition, (B) la contrepartie inférieure, (C) la contrepartie supérieure, (D) la partie supérieure de répartition, (E) un moyen de chauffage de la matière la moins chaude, (F) le manchon d'arrivée de la matière la moins chaude, (G) et (H) les éléments contenant les tubes de transfert de chaleur, (I) le manchon d'arrivée de la matière la moins chaude, (J) un moyen de chauffage de la matière la moins chaude. On distingue bien à l'extrémité des pièces (B) et (C) opposée aux arrivées des matières, l'espace rectangulaire (l'orifice) ou passent les deux matières.

Le poinçon (B) du dispositif de la figure 1/2 peut être percé en son axe de symétrie pour laisser passer un câble électrique ou de télécommunication ou des fibres optiques. Dans cette figure 2/2 (A) et/ou la partie de (B) proche de (A) peuvent comprendre des sculptures ou des rayures de différentes formes pour modifier l'écoulement de la matière. Il en est de même des canaux d'arrivée et de répartition de la matière la moins chaude dans la pièce(E).

On ne sortirait pas du cadre de l'invention s'il y avait plus de deux matières. Il suffit par exemple sur le dispositif de la figure 1/2 d'ajouter entre (E) et (G) un autre élément (D') et un autre élément (E') si cette troisième matière est à une température proche de la matière la moins chaude. Si cette troisième matière est une matière à une température proche ou identique à celle de la matière la plus chaude, alors on dispose dans l'ordre un élément (C') un élément (D'), et un élément (E') c'est-à-dire qu'on a dans l'ordre (A), (C), (D), (E), (C'), (D'), (E') et (G).

L'invention est utile pour les structures suivantes qu'elles soient en tubes ou en films ou en plaques voire moulées pour l'injection : PVDF/liant/PA/liant/caoutchouc.

Ce liant est par exemple une polyoléfine greffée par de l'anhydride maléique, c'est un thermoplastique qui s'extrude dans les mêmes plages de températures que le PA et le PVDF.

A titre d'exemple, on peut encore citer:
PVDF/liant/PA/caoutchouc
alliage de polyamide/caoutchouc
Polyamide élastomère/caoutchouc PVDF/liant/PVC
ou polyméthacrylate de méthyle/PVC

Les alliages de polyamide désignent par exemple, les mélanges de polyamide et de polyoléfine comprenant éventuellement au moins un agent compatibilisant.

Les polyamides élastomères désignent des (i) copolymères à blocs polyamides et blocs polyether (ii) éventuellement mélangés avec des polyamides.

## Revendications

1. Procédé de coextrusion d'au moins deux matières ayant des températures d'extrusion très différente, selon lequel on fait passer lesdites matières de façon séquentielle ou simultanée dans un dispositif muni d'au moins un orifice, le dispositif muni d'un orifice comprenant des tubes de transfert de chaleur fonctionnant par l'évaporation, la condensation et le pompage en tension superficielle d'un liquide dans une mèche capillaire, et selon lequel les températures d'extrusion des deux matières diffèrent de 50 à 150°C, et plus particulièrement de 80 à 120°C.

2. Procédé selon la revendication 1 dans lequel les deux matières sont choisies parmi les polyamides, les polyoléfines, leurs mélanges ou le polyfluorure de vinylidène pour l'une, et les caoutchoucs comprenant leurs agents de vulcanisation, le caoutchouc EPR, ou le polychlorure de vinyle pour l'autre.

## Patentansprüche

1. Verfahren zur Coextrusion von mindestens zwei Materialien, die sehr verschiedene Extrusionstemperaturen aufweisen, wobei man die Materialien nacheinander oder gleichzeitig durch eine Vorrichtung hindurchtreten läßt, die mit mindestens einer Öffnung ausgestattet ist, wobei diese Vorrichtung Kanäle für die Wärmeübertragung enthält, die auf der Verdampfung, der Kondensation und der Förderung auf Grund der Oberflächenspannung einer Flüssigkeit in einem Kapillarnetz beruht, und wobei sich die Extrusionstemperaturen der beiden Materialien um 50 bis 150 °C und insbesondere 80 bis 120 °C unterscheiden.

2. Verfahren nach Anspruch 1, wobei das eine Material unter Polyamiden, Polyolefinen, ihren Gemischen und Polyvinylidenfluorid und das andere Material unter Kautschuken, die ihre Vulkanisationsmittel enthalten, EPR-Kautschuk und Polyvinylchlorid ausgewählt wird.

## Claims

1. Process for coextruding at least two materials having very different extrusion temperatures, in which the said materials are made to pass sequentially or simultaneously through a device provided with at least one orifice, the device provided with an orifice comprising heat-transfer tubes operating by the evaporation, condensation and surface-tension pumping of a liquid in a capillary wick, and in which the extrusion temperatures of the two materials differ by between 50 and 150°C and more particularly by between 80 and 120°C.

2. Process according to Claim 1, in which the two materials are chosen from among polyamides, polyolefins, blends thereof or polyvinylidene fluoride in the case of one of the materials, and rubbers, including their vulcanizing agents, EPR rubber or polyvinyl chloride in the case of the other.
